# FASCICULE DE BREVET EUROPEEN

(11) **EP 3 502 750 B1**
(45) Date de publication et mention de la délivrance du brevet: **14.09.2022**
(21) Numéro de dépôt: 19405002.7
(22) Date de dépôt: 03.01.2019
(51) Int. Cl.: G01T 1/20

(54) **SCINTILLATEUR PLASTIQUE STRUCTURÉ**
STRUKTURIERTER PLASTIKSZINTILLATOR
STRUCTURED PLASTIC SCINTILLATOR

(30) Priorité: 22.12.2017 FR 1763166
(43) Date de publication de la demande: 26.06.2019
(73) Titulaire: Commissariat à l'énergie atomique et aux énergies alternatives, 75015 Paris (FR); Université de Technologie de Troyes, 10010 Troyes Cedex (FR)
(72) Inventeur: Lerondel, Gilles, 10800 Saint Julien LES Villas (FR); Le Cunff, Loïc, 10000 Troyes (FR); Simic, Vesna, 92370 Chaville (FR); Nomenyo, Komla, 10120 Saint Andre LES Vergers (FR); Salas Montiel, Rafäel, 10000 Troyes (FR); Trocme, Mathieu, 91190 GIF-SUR-Yvette Cedex (FR); Corre, Gwenole, 91190 GIF-SUR-Yvette (FR); Moline, Yoann, 91190 GIF-SUR-Yvette (FR); Woo, Romuald, 91190 GIF-SUR-Yvette Cedex (FR)
(74) Mandataire: Brevalex

(56) Documents cités:
- WO-A1-2013/101515
- CN-A- 106 094 003
- US-A1- 2006 202 125
- LIU BO ET AL: "Plasmonic lattice resonance-enhanced light emission from plastic scintillators by periodical Ag nanoparticle arrays", APPLIED PHYSICS LETTERS, A I P PUBLISHING LLC, US, vol. 110, no. 18, 1 mai 2017 (2017-05-01), XP012218491, ISSN: 0003-6951, DOI: 10.1063/1.4982782 [extrait le 2017-05-01]
- LIU BO ET AL: "Directional emission of quantum dot scintillators controlled by photonic crystals", APPLIED PHYSICS LETTERS, A I P PUBLISHING LLC, US, vol. 111, no. 8, 24 août 2017 (2017-08-24) , XP012221586, ISSN: 0003-6951, DOI: 10.1063/1.4993816 [extrait le 2017-08-24]

## Description

### DOMAINE TECHNIQUE

L'invention se situe dans le domaine de l'instrumentation nucléaire et, plus précisément, dans le domaine de la détection de rayonnements ionisants à l'aide de détecteurs à scintillation. Elle concerne un scintillateur plastique d'un tel détecteur dont la structure est optimisée pour la génération et la collecte du rayonnement photonique de scintillation.

### ÉTAT DE LA TECHNIQUE ANTÉRIEURE

Les détecteurs à scintillation sont des dispositifs comprenant un scintillateur et un photodétecteur couplés optiquement. Un scintillateur reçoit un -rayonnement ionisant sur l'une de ses faces, appelée face d'entrée, et émet un rayonnement photonique de scintillation du fait de l'interaction entre le rayonnement ionisant et le matériau. Le rayonnement photonique de scintillation est collecté par le photodétecteur depuis l'une des faces du scintillateur, appelée face de sortie, et converti en un signal électrique.

Les scintillateurs peuvent être classés en deux familles principales, à savoir les scintillateurs organiques et les scintillateurs inorganiques. Parmi les scintillateurs organiques se trouvent les scintillateurs plastiques, lesquels sont composés d'une matrice polymère, typiquement du polystyrène ou du polyméthylstyrène, incorporant des molécules fluorescentes. Les scintillateurs plastiques présentent de nombreux avantages du point de vue du matériau, notamment du fait de leur coût modéré, de leur disponibilité, de leur aptitude à être usinés, de leur robustesse, de leur caractère non hygroscopique ou encore de leur faible sensibilité à la chaleur. Ils présentent également des avantages du point de vue de la détection, en raison de leur temps de réponse très court et de leur forte teneur en hydrogène. Les scintillateurs plastiques sont cependant moins efficaces en termes de détection que les scintillateurs organiques cristallins (anthracène, stilbène) ou les scintillateurs à cristaux inorganiques. Leur rendement lumineux est de l'ordre de 10 photons/keV contre 30 à 60 photons/keV pour les scintillateurs inorganiques usuels et de 18 photons/keV pour les scintillateurs à cristaux organiques (anthracène).

Afin d'améliorer leur sensibilité, des solutions relevant de l'optique géométrique ont été proposées. Les détecteurs à scintillation comprennent par exemple un liant optique entre le scintillateur et le photodétecteur. Un revêtement réfléchissant ou diffusant peut aussi être appliqué sur les faces du scintillateur autres que la face de sortie afin de limiter la fraction perdue du rayonnement photonique de scintillation. Ces solutions, bien que simples à mettre en œuvre, présentent certaines limitations. Le liant optique est soumis au vieillissement et la sensibilité des détecteurs décroît au cours du temps. Les revêtements diffusants ne permettent pas d'orienter les photons dans une direction préférentielle, en l'espèce la direction dans laquelle se trouve le photodétecteur. Les revêtements réfléchissants se traduisent par une perte d'environ 10% d'intensité (nombre de photons) à chaque réflexion.

D'autres solutions ont été proposées par la communauté scientifique. Une première voie de recherche s'oriente vers la synthèse de matériaux aux propriétés intrinsèques améliorées en termes d'absorption du rayonnement ionisant ou de transfert énergétique entre molécules fluorescentes. Il est notamment possible d'améliorer la réponse d'un scintillateur plastique en augmentant son numéro atomique effectif ou en synthétisant de nouvelles molécules fluorescentes plus efficaces. Une deuxième voie de recherche s'oriente vers la photonique afin d'optimiser l'extraction du rayonnement photonique de scintillation. Il a notamment été proposé dans le document Enhanced light extraction efficiency of plastic scintillator by photonic crystal prepared with a self-assembly method, J. Liu et al, Nuclear Instruments and Methods in Physics Reasearch A 795 (2015), 505-308, de déposer des cristaux photoniques à la surface de matériaux émissifs. Un assemblage compact de billes de polystyrène de dimensions nanométriques est utilisé pour former une structure photonique anti-réfléchissante sur la face de sortie du scintillateur. Il est également possible de former une couche présentant des structures de tailles sub-diffractives sur la face de sortie du scintillateur ou sur les autres faces afin, respectivement d'adapter l'indice de réfraction entre le scintillateur et le photodétecteur ou de rediriger le rayonnement vers la face de sortie. Ces deux solutions sont présentées dans le document WO 2015/136165 A1.

Le document CN 106 094 003 A décrit un scintillateur comprenant une couche inférieure de scintillation, une couche de cristal photonique et une couche supérieure de scintillation. La couche de cristal photonique est réalisée en dioxyde de titane (TiO₂) et comprend un ensemble de trous présentant un agencement périodique triangulaire. La couche de cristal photonique a pour fonction de contrôler la direction d'émission des couches de scintillation afin de séparer spatialement l'émission issue de la couche inférieure de scintillation de l'émission issue de la couche supérieure de scintillation. L'article Bo LIU et al : « Plasmonic lattice resonance-enhanced light emission from plastic scintillators by periodical Ag nanoparticle arrays », Applied Physics Letters 110, 2017, décrit un scintillateur de type « résonance de réseau de surface ». Ce scintillateur est formé à partir d'un substrat en silicium sur lequel sont successivement déposées des nanoparticules d'argent et une couche de scintillation. Les nanoparticules d'argent sont agencées sur la surface du substrat sous forme d'un réseau périodique. L'article Bo LIU et al : « Directional emission of quantum dot scintillators controlled by photonic crystals », Applied Physics Letters 111, 2017, décrit un scintillateur nanocristal comprenant un substrat en silice, une couche de cristal photonique, une couche de conformation et une couche de scintillation. La couche de cristal photonique est formée de piliers agencés en réseau triangulaire et a pour effet de contrôler la direction de l'émission lumineuse.

Le document WO 2013/101515 A1 décrit un cristal de scintillation présentant des aspérités disposées sur une face destinée à venir en regard d'un photocapteur et ayant pour fonction d'augmenter le taux d'extraction des photons de scintillation par diffraction.

Le document US 2006/202125 A1 décrit un scintillateur à cristal photonique comprenant un empilement de deux cristaux photoniques. Chaque cristal photonique comporte un ensemble de trous ou de barres agencés de façon périodique.

L'invention a pour objectif non seulement d'améliorer encore l'extraction du rayonnement photonique de scintillation en direction du photodétecteur mais aussi d'augmenter le taux d'émission spontanée du scintillateur.

### EXPOSÉ DE L'INVENTION

À cet effet, l'invention utilise les récents progrès en nanophotonique et en nanostructuration pour former une zone nanostructurée dans l'épaisseur du scintillateur. La zone nanostructurée est formée d'un ensemble de cavités optiques dimensionnées pour le rayonnement photonique de scintillation. Cette zone nanostructurée permet non seulement d'augmenter l'efficacité de collection des photons de scintillation en les guidant selon un axe de propagation privilégié, mais aussi d'amplifier leur génération par effet Purcell. Contrairement aux scintillateurs décrits dans le document CN 106 094 003 A et dans les articles de Bo LIU, qui comprennent une couche de cristal photonique ou des nanoparticules formées dans un matériau spécifique, distinct du matériau de scintillation, le scintillateur selon l'invention ne nécessite qu'un matériau de scintillation pour à la fois convertir un rayonnement ionisant en rayonnement de scintillation, pour guider ce rayonnement de scintillation et l'amplifier.

Plus précisément, l'invention a pour objet un scintillateur plastique pour détecteur de rayonnements ionisants, selon les revendications 1 et 4, le scintillateur comprenant un bloc de matériau polymère radioluminescent apte à générer un rayonnement photonique de scintillation à une longueur d'onde prédéterminée sous l'effet d'un rayonnement ionisant. Selon l'invention, le bloc de matériau polymère radioluminescent comporte une pluralité de cavités optiques dont les dimensions sont déterminées en fonction de la longueur d'onde du rayonnement photonique de scintillation.

Dans le présent document, la structure du scintillateur plastique est définie par rapport à son axe optique, c'est-à-dire l'axe joignant une face d'entrée à une face de sortie du scintillateur plastique. La face d'entrée du scintillateur est définie comme étant la face recevant le rayonnement ionisant et la face de sortie est définie comme étant la face par laquelle le rayonnement photonique de scintillation est extrait pour être récupéré par un photodétecteur. Lorsque le scintillateur comporte un unique bloc de matériau polymère radioluminescent, les faces d'entrée et de sortie du scintillateur correspondent également aux faces d'entrée et de sortie de ce bloc de matériau polymère radioluminescent. Cet axe optique est aussi appelé « axe privilégié de propagation du rayonnement photonique de scintillation ». En règle générale, cet axe est perpendiculaire aux faces d'entrée et de sortie du scintillateur.

Les photons émis en cavité (photons Purcell) présentent un caractère directionnel. Ainsi, les cavités optiques sont avantageusement réalisées de manière à engendrer une direction privilégiée de propagation de ces photons selon l'axe optique du scintillateur, ce qui rend leur collection plus aisée. Les photons émis en cavité ont aussi la particularité d'être émis plus rapidement (c'est-à-dire avec un temps de décroissance plus court) que dans un environnement libre, ce qui peut être avantageusement utilisé pour différencier le rayonnement photonique de scintillation issu de la zone nanostructurée de celui issu de la zone dépourvue de nanostructures.

Selon une première branche de l'invention, chaque cavité optique est formée par un ensemble de trous dans le bloc de matériau polymère radioluminescent. Autrement dit, les éléments constitutifs des cavités optiques sont des trous réalisés dans le bloc de matériau polymère. Selon encore une autre formulation, chaque cavité optique est constituée par un ensemble de trous réalisés dans le bloc de matériau polymère radioluminescent. Aucun élément ou matériau additionnel n'est nécessaire pour former une cavité optique.

Les trous peuvent être formés depuis une surface du bloc de matériau polymère radioluminescent, ils débouchent alors sur cette même surface et sont susceptibles d'être remplis par un gaz. Le gaz peut être de l'air ou tout autre gaz déterminé de manière à obtenir l'indice de réfraction effectif souhaité pour la zone nanostructurée. Les trous peuvent alternativement être mis sous vide.

Dans une première forme de réalisation, chaque trou s'étend entre une face d'entrée et une face de sortie du bloc de matériau polymère radioluminescent. Autrement dit, les trous s'étendent sur toute l'épaisseur du bloc de matériau polymère radioluminescent selon un axe joignant la face d'entrée à la face de sortie du bloc. Cette forme de réalisation est réalisable lorsque l'épaisseur du bloc de matériau polymère est relativement faible, par exemple inférieure à 1 mm (millimètre).

Dans une deuxième forme de réalisation, le bloc de matériau polymère radioluminescent présente une couche monolithique, c'est-à-dire dépourvue de nanostructures, et une couche nanostructurée dans laquelle sont formées les cavités optiques. La couche monolithique présente par exemple une épaisseur comprise entre 100 µm (micromètres) et 20 cm (centimètres). La couche nanostructurée présente par exemple une épaisseur comprise entre 1 µm (micromètre) et 10 mm.

Dans une troisième forme de réalisation, le bloc de matériau polymère radioluminescent présente une couche monolithique et deux couches nanostructurées dans chacune desquelles sont formées les cavités optiques. La couche monolithique est prise en sandwich entre les deux couches nanostructurées.

Dans ces trois formes de réalisation, le scintillateur peut être formé de façon monobloc, la couche monolithique et la ou les couches nanostructurées étant issues d'un même bloc de matériau polymère radioluminescent. Néanmoins, chaque couche nanostructurée pourrait être fabriquée séparément de la couche monolithique et assemblée ensuite à cette couche monolithique.

Dans des formes de réalisation alternatives, le scintillateur peut être formé d'un empilement d'une ou plusieurs couches monolithiques et d'une ou plusieurs couches nanostructurées.

Selon une deuxième branche de l'invention, chaque cavité optique est formée par un ensemble de picots réalisés dans le bloc de matériau polymère radioluminescent. Les éléments constitutifs de chaque cavité optique sont alors des picots. Chaque picot, également appelé « pilier », forme une protubérance par rapport à une surface du bloc de matériau polymère radioluminescent. Selon une autre formulation, chaque cavité optique est constituée par un ensemble de picots réalisés dans le bloc de matériau polymère radioluminescent. Aucun élément ou matériau additionnel n'est nécessaire pour former une cavité optique.

Dans une première forme de réalisation, le bloc de matériau polymère radioluminescent présente une couche monolithique et une couche nanostructurée dans laquelle sont formés les picots. Chaque picot s'étend alors avantageusement depuis la couche monolithique. Lorsque les picots s'étendent depuis la couche monolithique, le scintillateur est formé de façon monobloc, c'est-à-dire à partir d'un même bloc de matériau polymère radioluminescent.

Dans une deuxième forme de réalisation, le bloc de matériau polymère radioluminescent présente une couche monolithique et deux couches nanostructurées dans chacune desquelles sont formés les picots. La couche monolithique est prise en sandwich entre les deux couches nanostructurées.

Dans des formes de réalisation alternatives, le bloc de matériau polymère radioluminescent peut être formé d'un empilement d'une ou plusieurs couches monolithiques et d'une ou plusieurs couches nanostructurées.

Il est à noter que les première et deuxième branches sont compatibles entre elles. Le bloc de matériau polymère radioluminescent peut comporter à la fois une ou plusieurs couches nanostructurées dont les cavités optiques sont formées de trous et une ou plusieurs couches nanostructurées dont les cavités optiques sont formées de picots.

Avantageusement, les cavités optiques s'étendent depuis une face d'entrée du bloc de matériau polymère radioluminescent, cette face étant destinée à recevoir le rayonnement ionisant. Autrement dit, chaque élément constitutif d'une cavité optique, à savoir un trou ou un picot, s'étend depuis la face d'entrée du bloc de matériau polymère radioluminescent. Les cavités optiques jouent alors un rôle d'amplification γ compris pour les rayonnements ionisants peu pénétrants, comme les rayonnements α et β.

Chaque trou ou picot constitutif d'une cavité optique peut présenter une forme de tube à section circulaire s'étendant selon l'axe joignant la face d'entrée à la face de sortie du bloc de matériau polymère radioluminescent, c'est-à-dire l'axe privilégié de propagation du rayonnement photonique de scintillation. En fonction du procédé de fabrication, chaque cavité optique peut aussi présenter une forme en tronc de cône.

Les dimensions des cavités optiques sont déterminées en fonction de la longueur d'onde du rayonnement photonique de scintillation. En particulier, lorsque les éléments constitutifs des cavités optiques (trous ou picots) présentent une forme de tube à section circulaire, le diamètre du tube est de préférence inférieur ou égal au rapport de la longueur d'onde du rayonnement photonique de scintillation sur le quadruple de l'indice de réfraction effectif du bloc de matériau polymère radioluminescent. Typiquement, le diamètre des tubes est de l'ordre de 100 nm (nanomètres) à 200 nm.

Les éléments constitutifs des cavités optiques sont avantageusement répartis, dans un plan perpendiculaire à l'axe joignant la face d'entrée à la face de sortie du bloc de matériau polymère radioluminescent, c'est-à-dire l'axe privilégié de propagation du rayonnement photonique de scintillation, de manière à former un réseau bidimensionnel. Plus préférentiellement, la répartition est homogène, afin de convertir de manière homogène le rayonnement ionisant frappant la face d'entrée du bloc de matériau polymère radioluminescent en rayonnement photonique de scintillation.

Plus spécifiquement, les éléments constitutifs des cavités optiques peuvent être répartis, dans le plan perpendiculaire à l'axe joignant la face d'entrée à la face de sortie du bloc de matériau polymère radioluminescent, de manière à former un réseau bidimensionnel hexagonal.

Dans l'invention, chaque élément constitutif d'une cavité optique est séparé d'un élément constitutif voisin d'une distance inférieure ou égale au rapport de la longueur d'onde du rayonnement photonique de scintillation sur le double de l'indice de réfaction effectif du bloc de matériau polymère radioluminescent. La distance de séparation est par exemple déterminée en considérant le centre de chaque élément constitutif.

Les éléments constitutifs des cavités optiques s'étendent par exemple, selon l'axe joignant la face d'entrée à la face de sortie du bloc de matériau polymère radioluminescent, sur une hauteur comprise entre 2 µm et 10 mm. Avantageusement, la hauteur des éléments constitutifs est choisie de manière à être supérieure ou égale à la profondeur de pénétration du rayonnement ionisant dans le matériau polymère. En pratique, la hauteur est toutefois limitée par le procédé de fabrication de la couche nanostructurée.

Le matériau polymère radioluminescent est choisi en fonction de l'application visée. À titre d'exemple, il se caractérise par une longueur d'onde du rayonnement photonique de scintillation comprise entre 350 nm et 650 nm et un temps de décroissance compris entre 1 ns et 1 µs (microseconde).

Il est à noter que le bloc de matériau polymère radioluminescent peut être susceptible de générer un rayonnement photonique de scintillation à plusieurs longueurs d'onde prédéterminées, du fait de la présence de différents types de fluorophores. Ainsi, dans une première forme de réalisation, tous les éléments constitutifs des cavités optiques du scintillateur peuvent présenter des dimensions déterminées en fonction de l'une des longueurs d'onde du rayonnement photonique de scintillation. Dans une deuxième forme de réalisation, le scintillateur comporte plusieurs ensembles de cavités optiques, les dimensions des éléments constitutifs des cavités optiques de chaque ensemble étant déterminées en fonction de l'une des longueurs d'onde du rayonnement photonique de scintillation. Les cavités optiques de chaque ensemble sont par exemple regroupées dans une même couche nanostructurée. Ainsi, une première couche nanostructurée peut présenter des cavités optiques dont le diamètre et la distance de séparation de leurs éléments constitutifs sont déterminés en fonction d'une première longueur d'onde du rayonnement photonique de scintillation et une deuxième couche nanostructurée peut présenter des cavités optiques dont le diamètre et la distance de séparation de leurs éléments constitutifs sont déterminés en fonction d'une deuxième longueur d'onde du rayonnement photonique de scintillation.

Par ailleurs, le scintillateur peut comprendre un deuxième bloc de matériau polymère radioluminescent apte à générer un deuxième rayonnement photonique de scintillation à une deuxième longueur d'onde prédéterminée, sous l'effet d'un deuxième rayonnement ionisant. Le premier et le deuxième bloc de matériau polymère radioluminescent sont empilés selon l'axe optique du scintillateur. La face de sortie de l'un des blocs de matériau polymère radioluminescent est en contact direct ou indirect avec la face d'entrée de l'autre bloc de matériau polymère radioluminescent. Dans le cas d'un contact indirect, un liant optique peut coupler les deux blocs.

Le deuxième bloc de matériau polymère radioluminescent peut comporter une couche monolithique et/ou une couche nanostructurée dans laquelle sont formées des cavités optiques. Les dimensions des cavités optiques sont alors déterminées en fonction de la longueur d'onde du deuxième rayonnement photonique de scintillation.

Les différentes formes de réalisation décrites en référence au premier bloc de matériau polymère radioluminescent sont applicables à ce deuxième bloc de matériau polymère radioluminescent. En particulier, le deuxième bloc de matériau polymère radioluminescent peut être formé d'un empilement d'une ou plusieurs couches monolithiques et d'une ou plusieurs couches nanostructurées. Il peut comporter des cavités optiques dont les éléments constitutifs sont des trous et/ou des picots ou piliers.

Les dimensions des cavités optiques sont déterminées en fonction de la deuxième longueur d'onde du rayonnement photonique de scintillation. Les éléments constitutifs des cavités optiques présentent par exemple une forme de tube à section circulaire. Dans ce cas, leur diamètre peut être inférieur ou égal au rapport de la deuxième longueur d'onde du deuxième rayonnement photonique de scintillation sur le quadruple de l'indice de réfraction effectif du deuxième bloc de matériau polymère radioluminescent.

Les éléments constitutifs des cavités optiques sont avantageusement répartis, dans un plan perpendiculaire à l'axe joignant la face d'entrée à la face de sortie du deuxième bloc de matériau polymère radioluminescent, de manière à former un réseau bidimensionnel, par exemple un réseau bidimensionnel hexagonal. Plus préférentiellement, la répartition est homogène.

Dans l'invention, chaque élément constitutif d'une cavité optique du deuxième bloc est séparé d'un élément constitutif voisin d'une distance inférieure ou égale au rapport de la deuxième longueur d'onde sur le double de l'indice de réfaction effectif du deuxième bloc de matériau polymère radioluminescent. La distance de séparation est par exemple déterminée en considérant le centre de chaque élément constitutif.

L'invention a également pour objet un détecteur de rayonnements ionisants comprenant un scintillateur tel que défini précédemment et un photodétecteur apte à recevoir au moins une partie du rayonnement photonique de scintillation et à générer un signal électrique représentatif de l'énergie déposée par le rayonnement ionisant dans le bloc de matériau polymère radioluminescent. Lorsque le scintillateur comprend un deuxième bloc de matériau polymère radioluminescent, le photodétecteur peut en outre être apte à recevoir au moins une partie du deuxième rayonnement photonique de scintillation et à générer un deuxième signal électrique représentatif de l'énergie déposée par le rayonnement ionisant dans le deuxième bloc de matériau polymère radioluminescent. Le photodétecteur peut comprendre une matrice de points photosensibles afin de générer une image bidimensionnelle.

Pour un rayonnement ionisant donné, un scintillateur nanostructuré selon l'invention génère un rayonnement photonique de scintillation amplifié. Ainsi, avec un détecteur de rayonnement intégrant un tel scintillateur, le signal électrique représentatif de l'énergie déposée par ce rayonnement ionisant peut être amélioré, notamment en termes d'amplitude électrique et de rapport signal sur bruit. De cette manière, il est possible d'utiliser un photodétecteur dont la sensibilité est moindre. Le dimensionnement, la qualité et/ou le coût du détecteur de rayonnements ionisants sont alors réduits.

Dans le cadre de l'utilisation d'un bloc composé de deux couches ayant des réponses différenciées (amplitude, temps de décroissance) vis-à-vis de rayonnements ionisants, le scintillateur permet d'augmenter les propriétés de discrimination entre rayonnements ionisants de nature et d'énergie différentes.

### BRÈVE DESCRIPTION DES DESSINS

L'invention sera mieux comprise à l'aide de la description qui va suivre, donnée uniquement à titre d'exemple non limitatif et faite en se référant aux dessins annexés sur lesquels :
- la figure 1 représente schématiquement un exemple de détecteur de rayonnements ionisants auquel l'invention est susceptible de s'appliquer ;
- la figure 2 représente la structure d'un détecteur de rayonnements ionisants selon l'invention ;
- la figure 3 représente un premier exemple de scintillateur selon l'invention avec des nanopiliers ;
- la figure 4 représente un deuxième exemple de scintillateur selon l'invention avec des nanotrous ;
- la figure 5 représente un exemple de procédé de fabrication d'une couche nanostructurée selon l'invention ;
- les figures 6A à 6F montrent le résultat de différentes étapes du procédé de fabrication de la figure 5.

### EXPOSÉ DÉTAILLÉ DE MODES DE RÉALISATION PARTICULIERS

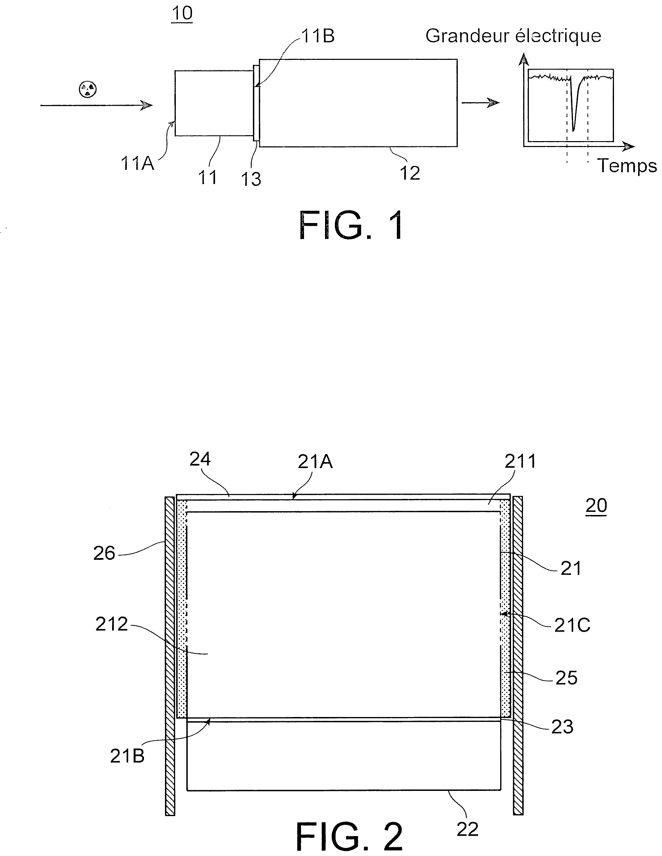

La figure 1 représente schématiquement un exemple de détecteur de rayonnements ionisants auquel l'invention est susceptible de s'appliquer. Le détecteur 10 comprend un scintillateur plastique 11, un photodétecteur 12 et un liant optique 13 couplant optiquement le scintillateur 11 et le photodétecteur 12. Le scintillateur plastique 11 est apte à générer un rayonnement photonique de scintillation lorsqu'il est exposé à un rayonnement ionisant tel qu'un rayonnement a, un rayonnement β ou un rayonnement γ. Il est formé dans un bloc de matériau polymère radioluminescent. En pratique, il est formé d'une matrice polymère incorporant des molécules fluorescentes. Le polymère est par exemple du polystyrène ou du polyméthylstyrène. Le scintillateur 11 présente une face d'entrée 11A destinée à recevoir le rayonnement ionisant et une face de sortie 11B couplée au photodétecteur 12 par l'intermédiaire du liant optique 13. Le photodétecteur 12 est agencé pour recevoir le rayonnement photonique de scintillation et générer un signal électrique représentatif de l'énergie déposée par le rayonnement incident dans le scintillateur 11. Le photodétecteur 12 peut comporter un dispositif à photocathode, par exemple un tube photomultiplicateur (PMT), un photodétecteur hybride (HPD) ou un photomultiplicateur à galette de micro-canaux (MCP-PMT), ou un dispositif à semi-conducteur, par exemple une photodiode à avalanche ou un photomultiplicateur silicium. Le liant optique 13 assure le couplage optique entre le scintillateur 11 et le photodétecteur 12. Il peut notamment former une couche d'adaptation d'indice.

La figure 2 représente plus précisément la structure d'un détecteur de rayonnements ionisants selon l'invention. Le détecteur 20 comprend également un scintillateur plastique 21, un photodétecteur 22 et un liant optique 23. Il comporte en outre une couche métallique 24 déposée sur la face d'entrée 21A du scintillateur 21, une couche 25 de matériau réfléchissant ou diffusant déposée sur les parois latérales 21C du scintillateur 21 et une enceinte 26 dans laquelle viennent se loger l'ensemble des éléments du scintillateur 21. La couche métallique 24 permet d'empêcher la lumière ambiante de pénétrer dans le scintillateur 21 et d'éviter que les photons de scintillation générés dans le scintillateur 21 ne s'échappent par la face d'entrée 21A. Elle présente par exemple une épaisseur comprise entre 100 nm et 1 µm. La couche 25 de matériau réfléchissant ou diffusant permet d'augmenter l'efficacité de la collection du rayonnement photonique de scintillation. La face de sortie 21B du scintillateur 21 est couplée optiquement au photodétecteur 22 par le liant optique 23.

Selon l'invention, le scintillateur 21 comporte une pluralité de cavités optiques dimensionnées en fonction de la longueur d'onde du rayonnement photonique de scintillation. Dans l'exemple de réalisation de la figure 2, les cavités optiques s'étendent depuis la face d'entrée 21A en direction de la face de sortie 21B. Elles permettent de définir une couche nanostructurée 211, dans laquelle sont formées les cavités optiques, et une couche monolithique 212, dépourvue de cavités optiques. La couche nanostructurée 211 présente par exemple une épaisseur comprise entre 2 µm et 10 mm. La couche monolithique 212 présente par exemple une épaisseur comprise entre 100 µm et 200 mm.

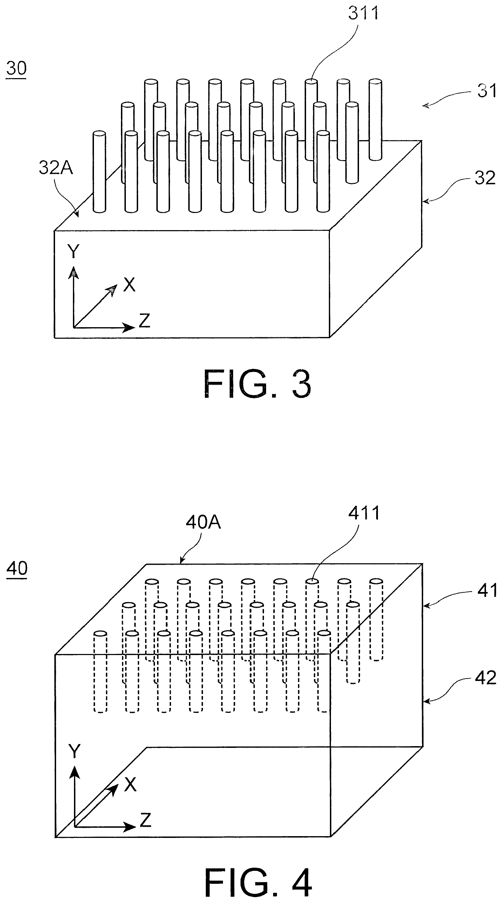

La figure 3 représente un premier exemple de scintillateur plastique selon l'invention. Le scintillateur plastique 30 comprend une couche nanostructurée 31 et une couche monolithique 32. La couche nanostructurée 31 est formée par un ensemble de piliers 311 s'étendant selon l'axe de propagation du rayonnement ionisant. Chaque pilier 311 s'étend depuis une surface 32A de la couche monolithique 32 sous forme d'un cylindre de révolution. Les surfaces aux extrémités libres des piliers 311 constituent de préférence la face d'entrée du scintillateur 30. Les piliers 311 présentent un même diamètre et une même hauteur. Le diamètre est par exemple environ égal à 100 nm et la hauteur est par exemple environ égale à 2 µm. Les piliers 311 sont réparties sur la surface 32A de manière à former un réseau hexagonal régulier. Ils sont espacés entre eux d'une distance environ égale à 300 nm. Les piliers 311 sont constitués du même matériau que la couche monolithique 32.

La figure 4 représente un deuxième exemple de scintillateur plastique selon l'invention. Le scintillateur plastique 40 comprend une couche nanostructurée 41 et une couche monolithique 42. Dans cet exemple de réalisation, la couche nanostructurée 41 est formée par un ensemble de trous 411 s'étendant selon l'axe de propagation du rayonnement ionisant. Chaque trou 411 s'étend de préférence depuis la face d'entrée 40A du scintillateur 40. Les trous 411 présentent chacun une forme de cylindre de révolution. Ils présentent par exemple un diamètre environ égal à 100 nm et une hauteur environ égale à 2 µm. Comme dans l'exemple de la figure 3, les trous 411 sont répartis de manière à former un réseau hexagonal régulier. Ils sont espacés entre eux d'une distance environ égale à 300 nm. Les trous 411 peuvent être mis sous vide ou remplis d'un gaz.

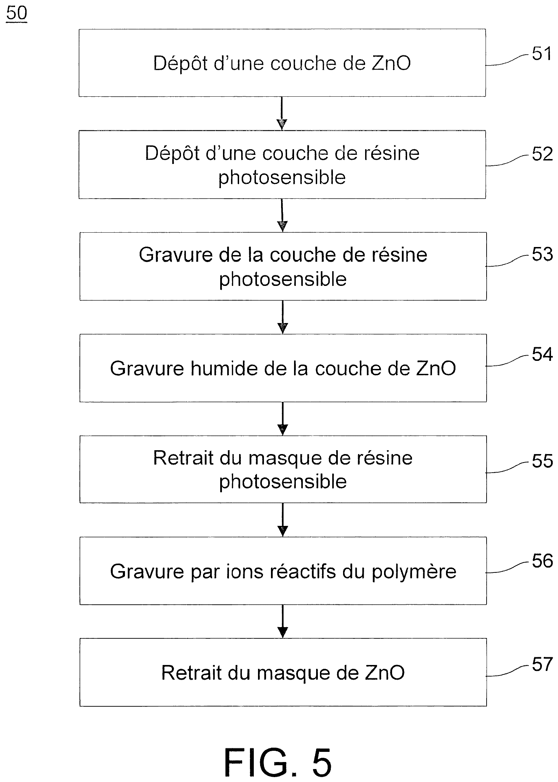

La figure 5 représente un exemple de procédé de fabrication d'une couche nanostructurée selon l'invention. Le procédé 50 comprend une première étape 51 de dépôt d'une couche d'oxyde de zinc (ZnO) sur la surface d'un bloc de matériau polymère, une étape 52 de dépôt d'une couche de résine photosensible sur la couche d'oxyde de zinc, une étape 53 de gravure de la couche de résine photosensible afin de former un masque de résine photosensible avec le motif souhaité, une étape 54 de gravure humide de la couche de ZnO pour former un masque de ZnO avec le même motif souhaité, une étape 55 de retrait du masque de résine photosensible, une étape 56 de gravure par ions réactifs du bloc de matériau polymère et une étape 57 de retrait du masque de ZnO.

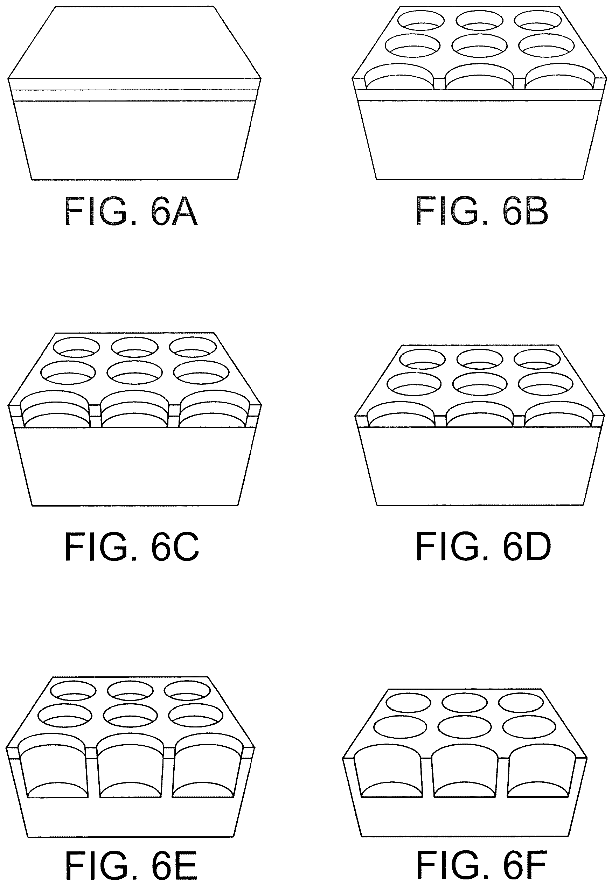

Les figures 6A à 6F illustrent le procédé de fabrication de la couche nanostructurée à l'issue de différentes étapes. En l'espèce, les figures 6A à 6F illustrent le procédé à l'issue des étapes 52 à 57, respectivement. Il est à noter que ces figures représentent la fabrication d'une couche nanostructurée formée d'un ensemble de trous, comme dans l'exemple de la figure 4. Néanmoins, le procédé s'applique tout aussi bien à la fabrication d'une couche nanostructurée formée d'un ensemble de piliers, en adaptant la forme du masque de résine photosensible, et donc celle du masque de ZnO. Des détails de mise en œuvre du procédé de fabrication décrit en référence aux figures 5 et 6A à 6F sont donnés dans le document Simple and Versatile High Aspect Ratio Nanostructuring via Zinc Oxide Masking, A. Gwiazda et al, Adv. Mater. Technol., 2017, 1700107.

Selon une variante de réalisation, le masque de ZnO est réalisé directement par une technique de lithographie par interférométrie laser. Les étapes 52 à 54 du procédé décrit en référence à la figure 5 sont alors remplacées par une étape d'exposition de la couche de ZnO à un rayonnement ultraviolet dans une solution de chlorure de sodium (NaCI). Ce procédé est décrit dans le document Direct Holographie Patterning of ZnO, C. Chevalier-César et al, Adv. Funct. Mater., 2016.

Bien entendu, tout autre procédé de fabrication pourrait être utilisé pour réaliser la couche nanostructurée.

## Revendications

1. Scintillateur plastique pour détecteur de rayonnements ionisants, le scintillateur (21, 30, 40) comprenant un bloc de matériau polymère radioluminescent apte à générer un rayonnement photonique de scintillation à une longueur d'onde prédéterminée sous l'effet d'un rayonnement ionisant, le bloc de matériau polymère radioluminescent comportant une pluralité de cavités optiques (311, 411) dont les dimensions sont déterminées en fonction de la longueur d'onde du rayonnement photonique de scintillation, de manière à amplifier le rayonnement photonique de scintillation par effet Purcell, chaque cavité optique étant formée par un ensemble de trous (411) dans le bloc de matériau polymère radioluminescent, les trous (411) s'étendant, selon un axe joignant une face d'entrée à une face de sortie du bloc de matériau polymère radioluminescent, sur une hauteur comprise entre 2 micromètres et 10 millimètres et étant répartis, dans un plan perpendiculaire à un axe joignant une face d'entrée à une face de sortie du bloc de matériau polymère radioluminescent, de manière à former un réseau bidimensionnel, les cavités optiques engendrant une direction de propagation privilégiée du rayonnement photonique de scintillation selon un axe optique du scintillateur, et les photons du rayonnement photonique de scintillation étant émis avec un temps de décroissance plus court dans les cavités qu'en dehors des cavités, le scintillateur plastique étant **caractérisé en ce que** chaque trou (411) constitutif d'une cavité optique (311, 411) est séparé d'un trou constitutif voisin d'une distance inférieure ou égale au rapport de la longueur d'onde du rayonnement photonique de scintillation sur le double de l'indice de réfraction effectif du bloc de matériau polymère radioluminescent.

2. Scintillateur selon la revendication 1, dans lequel chaque trou (411) s'étend entre la face d'entrée et la face de sortie du bloc de matériau polymère radioluminescent.

3. Scintillateur selon la revendication 1, dans lequel le bloc de matériau polymère radioluminescent présente une couche monolithique (42) et une couche nanostructurée (41) dans laquelle sont formées les cavités optiques (411).

4. Scintillateur plastique pour détecteur de rayonnements ionisants, le scintillateur (21, 30, 40) comprenant un bloc de matériau polymère radioluminescent apte à générer un rayonnement photonique de scintillation à une longueur d'onde prédéterminée sous l'effet d'un rayonnement ionisant, le bloc de matériau polymère radioluminescent comportant une pluralité de cavités optiques (311, 411) dont les dimensions sont déterminées en fonction de la longueur d'onde du rayonnement photonique de scintillation, de manière à amplifier le rayonnement photonique de scintillation par effet Purcell, chaque cavité optique étant formée par un ensemble de picots (311) réalisés dans le bloc de matériau polymère radioluminescent, les picots (311) s'étendant, selon un axe joignant une face d'entrée à une face de sortie du bloc de matériau polymère radioluminescent, sur une hauteur comprise entre 2 micromètres et 10 millimètres et étant répartis, dans un plan perpendiculaire à un axe joignant une face d'entrée à une face de sortie du bloc de matériau polymère radioluminescent, de manière à former un réseau bidimensionnel, les cavités optiques engendrant une direction de propagation privilégiée du rayonnement photonique de scintillation selon un axe optique du scintillateur, et les photons du rayonnement photonique de scintillation étant émis avec un temps de décroissance plus court dans les cavités qu'en dehors des cavités, le scintillateur plastique étant **caractérisé en ce que** chaque picot (311) constitutif d'une cavité optique (311, 411) est séparé d'un picot constitutif voisin d'une distance inférieure ou égale au rapport de la longueur d'onde du rayonnement photonique de scintillation sur le double de l'indice de réfraction effectif du bloc de matériau polymère radioluminescent.

5. Scintillateur selon la revendication 4, dans lequel le bloc de matériau polymère radioluminescent présente une couche monolithique (32) et une couche nanostructructurée (31) dans laquelle sont formés les picots (311), chaque picot s'étendant depuis la couche monolithique.

6. Scintillateur selon l'une des revendications précédentes, dans lequel les cavités optiques (311, 411) s'étendent depuis une face d'entrée (21A, 40A) du bloc de matériau polymère radioluminescent destinée à recevoir le rayonnement ionisant.

7. Scintillateur selon l'une des revendications précédentes, dans lequel chaque trou ou picot constitutif d'une cavité optique (311, 411) présente une forme de tube à section circulaire s'étendant selon un axe joignant une face d'entrée à une face de sortie du bloc de matériau polymère radioluminescent.

8. Scintillateur selon la revendication 7, dans lequel le tube de chaque trou ou picot constitutif d'une cavité optique présente un diamètre inférieur ou égal au rapport de la longueur d'onde du rayonnement photonique de scintillation sur le quadruple de l'indice de réfraction effectif du bloc de matériau polymère radioluminescent.

9. Scintillateur selon l'une des revendications précédentes, dans lequel les trous ou picots constitutifs des cavités optiques (311, 411) sont répartis, dans le plan perpendiculaire à un axe joignant une face d'entrée à une face de sortie du bloc de matériau polymère radioluminescent, de manière à former un réseau bidimensionnel hexagonal.

10. Scintillateur selon l'une des revendications précédentes comprenant, en outre, un deuxième bloc de matériau polymère radioluminescent apte à générer un deuxième rayonnement photonique de scintillation à une deuxième longueur d'onde prédéterminée sous l'effet d'un deuxième rayonnement ionisant.

11. Scintillateur selon la revendication 10, dans lequel le deuxième bloc de matériau polymère radioluminescent comporte une couche monolithique et/ou une couche nanostructurée dans laquelle sont formées des cavités optiques, les dimensions des cavitées optiques étant déterminées en fonction de la deuxième longueur d'onde du deuxième rayonnement photonique de scintillation.

12. Détecteur de rayonnements ionisants comprenant un scintillateur (20, 30, 40) selon l'une des revendications précédentes et un photodétecteur (12, 22) apte à recevoir au moins une partie du rayonnement photonique de scintillation et, le cas échéant, une partie du deuxième rayonnement photonique de scintillation, le photodétecteur étant apte à générer un signal électrique représentatif de l'énergie déposée par le rayonnement ionisant dans le bloc de matériau polymère radioluminescent et, le cas échéant, un deuxième signal électrique représentatif de l'énergie déposée par le deuxième rayonnement ionisant dans le deuxième bloc de matériau polymère radioluminescent.

## Patentansprüche

1. Plastikszintillator für einen Detektor für ionisierende Strahlung, wobei der Szintillator (21, 30, 40) einen Block aus radiolumineszierendem Polymermaterial umfasst, der unter der Wirkung ionisierender Strahlung eine Szintillations-Photonenstrahlung mit einer vorbestimmten Wellenlänge erzeugen kann, wobei der Block aus radiolumineszierendem Polymermaterial eine Vielzahl von optischen Hohlräumen (311, 411) aufweist, deren Abmessungen in Abhängigkeit von der Wellenlänge der Szintillations-Photonenstrahlung bestimmt werden, so dass die Szintillations-Photonenstrahlung durch Purcell-Effekt verstärkt wird, wobei jeder optische Hohlraum aus einer Anordnung von Löchern (411) in dem Block aus radiolumineszierendem Polymermaterial gebildet ist, wobei sich die Löcher (411) entlang einer Achse, die eine Eintrittsseite mit einer Austrittsseite des Blocks aus radiolumineszierendem Polymermaterial verbindet, über eine Höhe zwischen 2 Mikrometer und 10 Millimeter erstrecken und in einer Ebene senkrecht zu einer Achse, die eine Eintrittsseite mit einer Austrittsseite des Blocks aus radiolumineszierendem Polymermaterial verbindet, so verteilt sind, dass sie ein zweidimensionales Netzwerk bilden, wobei die optischen Hohlräume eine Vorzugsverbreitungsrichtung der Szintillations-Photonenstrahlung entlang einer optischen Achse des Szintillators bewirken, und wobei die Photonen der Szintillations-Photonenstrahlung in den Hohlräumen mit einer kürzeren Abbauzeit ausgegeben werden als außerhalb der Hohlräume,
wobei der Plastikszintillator **dadurch gekennzeichnet ist, dass** jedes Loch (411), das einen optischen Hohlraum (311, 411) bildet, von einem benachbarten Loch um einen Abstand getrennt ist, der kleiner oder gleich dem Verhältnis der Wellenlänge der Szintillations-Photonenstrahlung zum Zweifachen des effektiven Brechungsindex des Blocks aus radiolumineszentem Polymermaterial ist.

2. Szintillator nach Anspruch 1, wobei sich jedes Loch (411) zwischen der Eintrittsseite und der Austrittsseite des Blocks aus radiolumineszentem Polymermaterial erstreckt.

3. Szintillator nach Anspruch 1, wobei der Block aus radiolumineszierendem Polymermaterial eine monolithische Schicht (42) und eine nanostrukturierte Schicht (41) aufweist, in der die optischen Hohlräume (411) ausgebildet sind.

4. Plastikszintillator für einen Detektor für ionisierende Strahlung, wobei der Szintillator (21, 30, 40) einen Block aus radiolumineszierendem Polymermaterial umfasst, der unter der Wirkung ionisierender Strahlung eine Szintillations-Photonenstrahlung mit einer vorbestimmten Wellenlänge erzeugen kann, wobei der Block aus radiolumineszierendem Polymermaterial eine Vielzahl von optischen Hohlräumen (311, 411) aufweist, deren Abmessungen in Abhängigkeit von der Wellenlänge der Szintillations-Photonenstrahlung bestimmt werden, so dass die Szintillations-Photonenstrahlung durch Purcell-Effekt verstärkt wird, wobei jeder optische Hohlraum aus einer Anordnung von Stiften (311) gebildet ist, die in dem Block aus radiolumineszierendem Polymermaterial ausgebildet sind, wobei sich die Stifte (311) entlang einer Achse, die eine Eintrittsseite mit einer Austrittsseite des Blocks aus radiolumineszierendem Polymermaterial verbindet, über eine Höhe zwischen 2 Mikrometer und 10 Millimeter erstrecken und in einer Ebene senkrecht zu einer Achse, die eine Eintrittsseite mit einer Austrittsseite des Blocks aus radiolumineszierendem Polymermaterial verbindet, so verteilt sind, dass sie ein zweidimensionales Netzwerk bilden, wobei die optischen Hohlräume eine Vorzugsverbreitungsrichtung der Szintillations-Photonenstrahlung entlang einer optischen Achse des Szintillators bewirken, und wobei die Photonen der Szintillations-Photonenstrahlung in den Hohlräumen mit einer kürzeren Abbauzeit ausgegeben werden als außerhalb der Hohlräume,
wobei der Plastikszintillator **dadurch gekennzeichnet ist, dass** jeder Stift (311), der einen optischen Hohlraum (311, 411) bildet, von einem benachbarten Stift um einen Abstand getrennt ist, der kleiner oder gleich dem Verhältnis der Wellenlänge der Szintillations-Photonenstrahlung zum Zweifachen des effektiven Brechungsindex des Blocks aus radiolumineszentem Polymermaterial ist.

5. Szintillator nach Anspruch 4, wobei der Block aus radiolumineszentem Polymermaterial eine monolithische Schicht (32) und eine nanostrukturierte Schicht (31) aufweist, in der die Stifte (311) ausgebildet sind, wobei sich jeder Stift von der monolithischen Schicht aus erstreckt.

6. Szintillator nach einem der vorhergehenden Ansprüche, wobei sich die optischen Hohlräume (311, 411) von einer Eintrittsseite (21A, 40A) des Blocks aus radiolumineszierendem Polymermaterial erstrecken, die dazu bestimmt ist, ionisierende Strahlung aufzunehmen.

7. Szintillator nach einem der vorhergehenden Ansprüche, wobei jedes Loch oder jeder Stift, das bzw. der einen optischen Hohlraum (311, 411) bildet, eine Röhrenform mit kreisförmigem Querschnitt aufweist, die sich entlang einer Achse erstreckt, die eine Eintrittsseite mit einer Austrittsseite des Blocks aus radiolumineszierendem Polymermaterial verbindet.

8. Szintillator nach Anspruch 7, wobei die Röhre jedes Lochs bzw. Stifts, das bzw. der einen optischen Hohlraum bildet, einen Durchmesser aufweist, der kleiner oder gleich dem Verhältnis der Wellenlänge der Szintillations-Photonenstrahlung zum Vierfachen des effektiven Brechungsindex des Blocks aus radiolumineszentem Polymermaterial ist.

9. Szintillator nach einem der vorhergehenden Ansprüche, wobei die Löcher bzw. Stifte, die die optischen Hohlräume (311, 411) bilden, in der Ebene senkrecht zu einer Achse, die eine Eintrittsseite mit einer Austrittsseite des Blocks aus radiolumineszierendem Polymermaterial verbindet, so verteilt sind, dass sie ein zweidimensionales hexagonales Netzwerk bilden.

10. Szintillator nach einem der vorhergehenden Ansprüche, ferner enthaltend einen zweiten Block aus radiolumineszierendem Polymermaterial, der unter der Wirkung einer zweiten ionisierenden Strahlung eine zweite Szintillations-Photonenstrahlung mit einer zweiten vorbestimmten Wellenlänge erzeugen kann.

11. Szintillator nach Anspruch 10, wobei der zweite Block aus radiolumineszierendem Polymermaterial eine monolithische Schicht und/oder eine nanostrukturierte Schicht aufweist, in der optische Hohlräume ausgebildet sind, wobei die Abmessungen der optischen Hohlräume in Abhängigkeit von der zweiten Wellenlänge der zweiten Szintillations-Photonenstrahlung bestimmt werden.

12. Detektor für ionisierende Strahlung mit einem Szintillator (20, 30, 40) nach einem der vorhergehenden Ansprüche und einem Fotodetektor (12, 22), der geeignet ist, mindestens einen Teil der Szintillations-Photonenstrahlung und gegebenenfalls einen Teil der zweiten Szintillations-Photonenstrahlung aufzunehmen, wobei der Fotodetektor geeignet ist, ein elektrisches Signal zu erzeugen, das repräsentativ ist für die durch die ionisierende Strahlung in dem Block aus radiolumineszierendem Polymermaterial eingebrachte Energie, sowie gegebenenfalls ein zweites elektrisches Signal, das repräsentativ ist für die durch die zweite ionisierende Strahlung in dem zweiten Block aus radiolumineszierendem Polymermaterial eingebrachte Energie.

## Claims

1. Plastic scintillator for detecting ionizing radiation, the scintillator (21, 30, 40) comprising a block of polymer material able to generate scintillation photon radiation at a predetermined wavelength under the effect of an ionizing radiation, the block of radioluminescent polymer material comprising a plurality of optical cavities (311, 411) the dimensions of which are determined according to the wavelength of the scintillation photon radiation, so as to amplify the scintillation photon radiation by the Purcell effect, each optical cavity being formed by a set of holes (411) in the block of radioluminescent polymer material, the holes (411) extending, along an axis joining an entry face to an exit face of the block of radioluminescent polymer material, to a height comprised between 2 micrometers and 10 millimeters and being distributed, in a plane perpendicular to an axis joining an entry face to an exit face of the block of radioluminescent polymer material, so as to form a two-dimensional array, the optical cavities generating a favored direction of propagation for the scintillation photon radiation along an optical axis of the scintillator, and the photons of the scintillation photon radiation being emitted with a decay time shorter in the cavities than outside the cavities, the plastic scintillator being **characterized in that** each hole (411) constituting an optical cavity (311, 411) is separated from a neighboring constituting hole by a distance less than or equal to the ratio of the wavelength of the scintillation photon radiation to twice the effective refractive index of the block of radioluminescent polymer material.

2. Scintillator according to claim 1, in which each hole (411) extends between the entry face and the exit face of the block of radioluminescent polymer material.

3. Scintillator according to claim 1, in which the block of radioluminescent polymer material has a monolithic layer (42) and a nanostructured layer (41) in which the optical cavities (411) are formed.

4. Plastic scintillator for detecting ionizing radiation, the scintillator (21, 30, 40) comprising a block of radioluminescent polymer material able to generate scintillation photon radiation at a predetermined wavelength under the effect of an ionizing radiation, the block of radioluminescent polymer material comprising a plurality of optical cavities (311, 411) the dimensions of which are determined according to the wavelength of the scintillation photon radiation, so as to amplify the scintillation photon radiation by the Purcell effect, each optical cavity being formed by a set of pins (311) formed in the block of radioluminescent polymer material, the pins (311) extending, along an axis joining an entry face to an exit face of the block of radioluminescent polymer material, to a height comprised between 2 micrometers and 10 millimeters and being distributed, in a plane perpendicular to an axis joining an entry face to an exit face of the block of radioluminescent polymer material, so as to form a two-dimensional array, the optical cavities generating a favored direction of propagation for the scintillation photon radiation along an optical axis of the scintillator, and the photons of the scintillation photon radiation being emitted with a decay time shorter in the cavities than outside the cavities, the plastic scintillator being **characterized in that** each pin (311) constituting an optical cavity (311, 411) is separated from a neighboring constituting pin by a distance less than or equal to the ratio of the wavelength of the scintillation photon radiation to twice the effective refractive index of the block of radioluminescent polymer material.

5. Scintillator according to claim 4, in which the block of radioluminescent polymer material has a monolithic layer (32) and a nanostructured layer (31) in which the pins (311) are formed, each pin extending from the monolithic layer.

6. Scintillator according to one of the preceding claims, in which the optical cavities (311, 411) extend from an entry face (21A, 40A) of the block of radioluminescent polymer material configured to receive the ionizing radiation.

7. Scintillator according to one of the preceding claims, in which each hole or pin constituting an optical cavity (311, 411) has a tube shape of circular cross-section extending along an axis joining an entry face to an exit face of the block of radioluminescent polymer material.

8. Scintillator according to claim 7, in which the tube of each hole or pin constituting an optical cavity has a diameter less than or equal to the ratio of the wavelength of the scintillation photon radiation to four times the effective refractive index of the block of radioluminescent polymer material.

9. Scintillator according to one of the preceding claims, in which the holes or pins constituting the optical cavities (311, 411) are distributed, in the plane perpendicular to an axis joining an entry face to an exit face of the block of radioluminescent polymer material, so as to form a hexagonal two-dimensional array.

10. Scintillator according to one of the preceding claims further comprising a second block of radioluminescent polymer material able to generate a second scintillation photon radiation at a second predetermined wavelength under the effect of a second ionizing radiation.

11. Scintillator according to claim 10, in which the second block of radioluminescent polymer material comprises a monolithic layer and/or a nanostructured layer in which optical cavities are formed, the dimensions of the optical cavities being determined according to a second wavelength of the second scintillation photon radiation.

12. Ionizing radiation detector comprising a scintillator (20, 30, 40) according to one of the preceding claims and a photodetector (12, 22) able to receive at least some of the scintillation photon radiation and, as the case may be, some of the second scintillation photon radiation, the photodetector being able to generate an electrical signal representing the energy deposited by the ionizing radiation in the block of radioluminescent polymer material and, as the case may be, a second electrical signal representing the energy deposited by the second ionizing radiation in the second block of radioluminescent polymer material.
